# EUROPEAN PATENT SPECIFICATION

(11) **EP 3 110 688 B1**
(45) Date of publication and mention of the grant of the patent: **30.01.2019**
(21) Application number: 14815853.8
(22) Date of filing: 22.12.2014
(51) Int. Cl.: B63B 25/02, B63C 9/26, B60P 7/08, B66C 1/12, D04G 1/00

(54) **NETWORK INTERSECTIONS, METHOD FOR THEIR ASSEMBLY AND DEVICES COMPRISING THEM**
NETZWERKSCHNITTSTELLEN, VERFAHREN ZU DEREN MONTAGE UND VORRICHTUNGEN DAMIT
INTERSECTIONS DE RÉSEAU, LEURS PROCÉDÉS D'ASSEMBLAGE ET DISPOSITIFS LES CONTENANT

(30) Priority: 23.12.2013 GB 201322903
(43) Date of publication of application: 04.01.2017
(73) Proprietor: Wisla Narrow Fabrics Limited, Manchester M43 7EF (GB)
(72) Inventor: KOZACZEK, Edward, Manchester M43 7EF (GB); TAYLOR, David, Berkshire RG10 8DR (GB)
(74) Representative: Round, Edward Mark
(86) International application number: PCT/GB2014/053823
(87) International publication number: WO 2015/097466

(56) References cited:
- EP-A1- 2 178 743
- US-A- 2 402 709

## Description

### Technical Field

The present invention relates to network intersection structures for netting and to devices comprising such network intersections and methods of their assembly.

### Background of the Invention

Netting and net devices are used for many purposes and are constructed from a network of elements forming a grid. The elements are usually fixed to one another at their intersections, and this is commonly done by sewing the elements together. At present it is common for netting and net-like devices to be made from strips of webbing, due to its strength.

A known type of net device is a cargo net. These are large net structures used for loading and unloading goods from cargo ships or other cargo transporters. Cargo nets are made from a network of rope or webbing arranged in a grid, with perpendicular elements of the network crossing one another, thus forming intersections. During construction each intersection of a cargo net is usually temporarily held together, such as by gluing or pinning, before being stitched on a sewing machine, in order to permanently lock the elements of the net together. However, due to the large size of these nets, sewing of the network intersections is cumbersome, time consuming and prone to mistakes. The correction of these mistakes makes the assembly of cargo nets even more time consuming. The difficulty and time involved in making these nets adds to the cost of producing them.

Webbing is also used to make other net-like devices such as ladders, cradles and stretchers, and the network intersections of these devices are also fixed together through the use of stitching. EP2178743 discloses a device made from flexible webbing. Rigid rods are encased within respective lengths of a first kind of elongate webbing which is flanged and has an axial bore so as to create form a tubular sheath. This first kind of webbing encases each rigid rod within the respective axial bore and each length thereof passes through a respective transverse passage in a length of a second kind of elongate webbing. The two different webbing elements are fastened together at the pocket, formed by the transverse passage, by stitching. A disadvantage with this device is that it can be loaded in only one direction as it is rigid in only one direction, i.e. perpendicular to the flanged webbing.

The use of stitching to secure the intersections of netting and other net-like devices also produces the disadvantage that the stitches present weak points in the construction of the device. The strength of the intersections is dependent on the strength of the stitching and, in the event of the stitching breaking, intersections are likely to come apart. In particular, stitches are prone to rotting and the puncture holes in the material being sewn can be vulnerable to tearing.

Flanged webbing of the first kind described in EP2178743 may be woven together at the sides and open in the middle of the strip to form a tube or bore along the length of the webbing. The second kind of elongate webbing having transverse passages does not form a tube but has pockets (transverse passages) at intervals along its length. Flanged webbing is usually made on a standard loom while webbing with transverse passages may be made on specialised, double rapier looms which require specialist training to use. An example of such a specialised, double rapier loom is a Müller NFRE42 Multronic loom.

The present invention seeks to provide greater ease of construction and/or alleviate one or more of the disadvantages of currently used network intersection structures.

### Definition of the Invention

The present invention relates to a network intersection structure for netting, the network intersection comprising a first elongate non-rigid element, a second elongate non-rigid element and an elongate central component, wherein the first non-rigid element comprises a longitudinal axis, a width perpendicular to the longitudinal axis, an axially-oriented bore and a transverse passage extending across the whole width of the first non-rigid element, the second non-rigid element comprises a longitudinal axis, a width perpendicular to the longitudinal axis and a transverse passage extending across the whole width of the second non-rigid element, and the central component is positioned within the axially-oriented bore of the first non-rigid element and the transverse passages of the first and second non-rigid elements.

In another aspect, the present invention is a kit of parts for assembly of a netting device, the kit comprising a first elongate non-rigid element comprising a longitudinal axis, a width perpendicular to the longitudinal axis, an axially-oriented bore and a transverse passage extending across the whole width of the first non-rigid element, a second elongate non-rigid element comprising a longitudinal axis, a width perpendicular to the longitudinal axis and a transverse passage extending across the whole width of the second non-rigid element, and an elongate central component.

Devices can comprise a network intersection structure as described above.

A device can comprise a plurality of first elongate non-rigid elements each comprising a longitudinal axis, a width perpendicular to the longitudinal axis, an axially-oriented bore and a transverse passage extending across the whole width of the first non-rigid element, a plurality of second elongate non-rigid elements each comprising a longitudinal axis, a width perpendicular to the longitudinal axis and a transverse passage extending across the whole width of the second non-rigid element, and a plurality of elongate central components, wherein each second non-rigid element intersects each first non-rigid element at a transverse passage of the first non-rigid element, such that each transverse passage of the second non-rigid element is positioned within a transverse passage of each first non-rigid element, each central component is positioned within the axially-oriented bore of a first non-rigid element and passes through the transverse passage of each second non-rigid element intersecting the first non-rigid element.

In a further aspect, the present invention relates to a method according to claim 16.

### Summary of Invention

The elongate axially-oriented bore of the first non-rigid element may be formed by the first non-rigid element bifurcating and rejoining in a direction perpendicular to the longitudinal axis of the first non-rigid element, along the entire length of the first non-rigid element.

Preferably, the transverse passage of the second non-rigid element is positioned within the transverse passage of the first non-rigid element.

Advantageously, the transverse passage of the second non-rigid element is aligned with the axially-oriented bore of the first non-rigid element.

So in essence, in preferred embodiments the second non-rigid element extends through the transverse passage of the first non-rigid element so that the transverse passage of the second non-rigid element is located within the transverse passage of the first non-rigid element and the transverse passage of the second non-rigid element is aligned with the axially-oriented base of the first non-rigid element and the central component extends through the transverse passage of the second non-rigid element. Conveniently, embodiments of the invention may comprise one or more further (third, fourth, etc) non-rigid elements. Such further non-rigid element comprises a longitudinal axis, a width perpendicular to the longitudinal axis and a transverse passage extending across the whole width of the third non-rigid element. Each such further non-rigid element is intended to extend parallel to the second non-rigid element, through the transverse passage of the first non-rigid element with its transverse passage aligned with the axially-oriented bore at the first non-rigid element (so that the central component may extend through each).

Preferably, the transverse passage of the first non-rigid element is formed by the first non-rigid element bifurcating and rejoining in the direction of the longitudinal axis of the first non-rigid element. More preferably, the transverse passage of the first non-rigid element is formed by two single thickness sections of the material of the first non-rigid element which lie on either side of the second and (if present) third, and optionally more, non-rigid elements.

Advantageously, the transverse passage of the second and (if present) third, and optionally more, non-rigid elements is made by the relevant non-rigid element bifurcating and rejoining in the direction of the longitudinal axis of the relevant non-rigid element.

Conveniently, each transverse passage has a length defined as the distance between the point of bifurcation and the point of rejoining of the relevant non-rigid element.

Preferably, the first non-rigid element and the second non-rigid element are secured in position relative to each other without the use of stitching. By passing through both the axially-oriented bore of the first non-rigid element and the transverse passage of the second, and optionally third or more, non-rigid element, the central component secures the first and second, and optionally third or more, non-rigid elements together without the need for stitching.

Conveniently, the transverse passage of the first non-rigid element has a length in the direction of the longitudinal axis of the first non-rigid element. Preferably, the length of the transverse passage of the first non-rigid element is substantially the same as the width of the second non-rigid element, such that the second non-rigid element fits snugly within the transverse passage of the first non-rigid element. Advantageously, in other embodiments, the length of the transverse passage of the first non-rigid element may be greater than the width of the second non-rigid element. In some embodiments, the width of the second non-rigid element may be at least 50%, preferably at least 80%, more preferably at least 85%, even more preferably at least 90%, and especially preferably at least 95% of the length of the transverse passage of the first non-rigid element. In some embodiments the length of the transverse passage of the first non-rigid element may be twice the width of the second non-rigid element.

Advantageously, in embodiments comprising a third, and optionally more, non-rigid elements, the second and third, and optionally more, non-rigid elements fit snugly within the transverse passage of the first non-rigid element. Conveniently, each of the second and third, and optionally more, non-rigid elements may have different widths. Preferably, the sum of the widths of the second and third, and optionally more, non-rigid elements is less than or substantially the same as the length of the transverse passage of the first non-rigid element. In some embodiments, each of the second and third, and optionally more, non-rigid elements has a minimum width of 8mm.

The close fit of the second, and optionally third or more, non-rigid element within the transverse passage of the first non-rigid element provides the advantage that the second, and optionally third or more, non-rigid element has little or no room to slip within the transverse passage of the first non-rigid element, thereby ensuring that the network intersection is secure.

Advantageously, the first non-rigid element may comprise at least one flange extending radially from the axially-oriented bore. In such embodiments, the width of the axially-oriented bore is less than the entire width of the first non-rigid element.

Conveniently, in other embodiments, the first non-rigid element does not comprise flanges and the axially-oriented bore formed by the first non-rigid element has the same width as the width of the first non-rigid element.

Advantageously, in embodiments wherein the first non-rigid element does not have flanges, the transverse passage of the first non-rigid element extends across the whole width of the first non-rigid element.

Preferably, the longitudinal axis of each of the second and optionally third or more non-rigid elements is between 45° and 90° to the longitudinal axis of the first non-rigid element. More preferably, the longitudinal axis of each of the second and optionally third or more non-rigid elements is between 55° and 90°, even more preferably between 65° and 90° and especially preferably between 75° and 90° to the longitudinal axis of the first non-rigid element. In especially preferred embodiments, the longitudinal axis of each of the second and optionally third or more non-rigid elements is substantially perpendicular to the longitudinal axis of the first non-rigid element.

Conveniently, embodiments of the invention may comprise an insert within the transverse passage of the second non-rigid element. In embodiments comprising a third, and optionally more, non-rigid element, there may be an insert within the transverse passage of the third, and optionally more, non-rigid element. In some embodiments, the insert is tubular and the lumen of the tubular insert has a diameter such that the central component can pass freely through said tubular insert. The tubular insert is positioned within the transverse passage such that the open ends of the tube face the open edges of the transverse passage of the second, and optionally third or more, non-rigid element. Accordingly, when the transverse passage of the second, and optionally third or more, non-rigid element is positioned within the transverse passage of the first non-rigid element, the path defined by the tubular insert is aligned with the axially-oriented bore of the first non-rigid element. In preferred embodiments, the length of the tubular insert, in the direction of the longitudinal axis of the first non-rigid element, does not exceed the width of the second, and optionally third or more, non-rigid element. Preferably, the tubular insert is cylindrical. Advantageously, the tubular insert can be of any shape.

Conveniently, in other embodiments, the central component is not passed through the insert and, instead, insertion of the central component into the transverse passage of the second, and optionally third or more, non-rigid element during assembly of the intersection displaces the insert from the transverse passage. Thus, in some embodiments, the displaceable insert may not be tubular. In such embodiments the displaceable insert may be in the form of a disc comprising at least one concave face. Advantageously, the disc may be positioned within the transverse passage of the second, and optionally third or more, non-rigid elements such that the faces of the disc face the open edges of the transverse passage. Conveniently, the disc is positioned within the transverse passage such that the at least one concave face of the disc faces the central component as the central component is inserted into the transverse passage of the second, and optionally third or more, non-rigid element.

In other embodiments, the displaceable insert may be a short length of non-tubular rod. In further embodiments, the displaceable insert may be tubular, wherein the lumen of the tubular insert has a diameter than does not allow the central component to pass through said lumen of the tubular insert. In some embodiments, the tubular displaceable insert is a tubular rod. Preferably, when the transverse passage of the second, and optionally third or more, non-rigid element is positioned within the transverse passage of the first non-rigid element, the insert is aligned with the axially-oriented bore of the first non-rigid element. Conveniently, the tubular or non-tubular displaceable insert is positioned within the transverse passage of the second, and optionally third or more, non-rigid element such that the ends of the insert face the open edges of the transverse passage of the non-rigid element. Advantageously, the length of the displaceable insert is the same as or less than the width of the second, and optionally third or more, non-rigid element. This provides the advantage that the insert does not hinder the positioning of the second, and optionally third or more, non-rigid element within the transverse passage of the first non-rigid element.

During assembly of the network intersection, the insertion of the central component into the axial bore exerts a force upon the displaceable insert, in the direction of the longitudinal axis of the first non-rigid element, which causes the insert to be displaced from the transverse passage. The force exerted by the central component pushes the displaceable insert through the axial bore of the first non-rigid element, and the displaceable insert can be removed from the axially-oriented bore at the remaining open end of the first non-rigid element. Advantageously, in embodiments using a discshaped insert, the at least one concave face of the insert helps align the central component onto the centre of the transverse passages and the axially-oriented bore, thereby improving the ease of assembly of the network intersection and devices comprising such network intersections. In some embodiments, the non-tubular displaceable inserts may have concave ends, which help align the central component onto the centre of the transverse passages and the axially-oriented bore, thereby improving the ease of assembly of the network intersection and devices comprising such network intersections.

The purpose of the insert is to be a marker of the transverse passage and, thus, allows the transverse passage of the second, and optionally third or more, non-rigid element to be easily aligned with the axially-oriented bore of the first non-rigid element. In addition, the insert maintains the two single thickness sections of material forming the passage apart from one another, thereby facilitating the passage of the central component through the transverse passage upon assemble of the network intersection.

Advantageously, the central component may be made of a rigid, semi-rigid or non-rigid material. When non-rigid or semi-rigid, it may have sufficient flexibility to bend into the shape desired for the net. The central component may be made of any natural or synthetic material or combination thereof. In some embodiments, the central component is woven. Conveniently, the non-rigid central component may be made of webbing. In other embodiments, the central component may be moulded or extruded. For example, the non-rigid central component may be made from a polymer, a composite material, metal or a fibre.

Preferably, the central component is made from a multifilament synthetic material. In alternative embodiments, the central component is made from a meta-aramid material.

Advantageously, the central component may be a rigid rod and may be made from any natural or synthetic material or combination thereof. Preferably, the rigid rod is made from a polymer, composite material, metal, a fibre, such as carbon fibre, or any other suitable rigid material.

Conveniently, the non-rigid elements may be made of any natural or synthetic material or combination thereof. In some embodiments, at least one of the non-rigid elements may be made of a woven material, for example, webbing. In other embodiments, at least one of the non-rigid elements may be moulded or extruded. For example, the non-rigid element may be made from a polymer.

Advantageously, the non-rigid elements may be of any cross-sectional shape. In some embodiments, at least one of the non-rigid elements has a circular cross-section. In other embodiments, at least one of the non-rigid elements may be flat, to form a tape.

Preferably, at least one of the non-rigid elements is woven. More preferably, at least one of the non-rigid elements is made of webbing.

Conveniently, at least one of the non-rigid elements may be made from a multifilament synthetic material. In other embodiments, at least one of the non-rigid elements may be made from a meta-aramid material.

Preferably, the multifilament synthetic material may be made from fibres selected from polyamides such as Nylon, modacrylics (modified acrylic fibers made from acrylonitriles), polyolefins, acrylics, polyesters, aramids (e.g. meta- aramids such as Nomex (RTM), Kevlar (RTM) or Twaron (RTM)), synthetic and semi-synthetic celluloses such as Modal or Lyocell, PBIs (polybenzimidazoles), polylactide types, and any other kind of polymeric material used in the manufacture of fibres. Any of these may be used alone or in combination, optionally with one or more fibres to add to tensile strength such as glass fibre or carbon fibre.

Advantageously, a meta-aramid material, especially Kevlar (RTM) or Nomex (RTM) is used.

Conveniently, in embodiments where at least one of the non-rigid elements is made from a polymer, the non-rigid element may be formed from one piece or may, for example, be formed from two heat-sealed strips. Extrudable or thermoformable polymers may for example be used alone or in combination, e.g. polymers, oligomers or polymers such as polyolefins, vinyl polymers, polyurethanes or any other polymeric material suitable for the purpose.

Advantageously, the non-rigid elements and the central component of the present invention may be made from the same material or from different materials.

In embodiments wherein the first non-rigid element is made of woven material, the first non-rigid element can be made on double rapier looms known to those skilled in the art, such as a Müller Multronic loom. In embodiments wherein the second, and optionally third or more, non-rigid element is made of woven material, the second, and optionally third or more, non-rigid element can be made by methods currently known to those skilled in the art.

Preferably, in embodiments comprising a third non-rigid element, the third non-rigid element is positioned within the transverse passage of the first non-rigid element, in series with the transverse passage of the second non-rigid element in the direction of the longitudinal axis of the first non-rigid element.

Advantageously, the second and third, and optionally more, non-rigid elements share a longitudinal axis, such that they are parallel. In alternative embodiments, the longitudinal axis of the second non-rigid element is not parallel to the longitudinal axis of the third, and optionally more, non-rigid element. In such embodiments, the longitudinal axis of the second non-rigid element is preferably between 5° and 75° to the longitudinal axis of the third non-rigid element. More preferably, the longitudinal axis of the second non-rigid element is between 10° and 65°, even more preferably between 15° and 55°, and especially preferably between 15° and 45° to the longitudinal axis of the third non-rigid element. In further embodiments, neither the longitudinal axis of the second nor the third non-rigid element is perpendicular to the longitudinal axis of the first non-rigid element.

Preferably, devices according to the present invention comprise a network intersection structure according to any embodiment described above.

Conveniently, devices according to the present invention comprise a plurality of first and second non-rigid elements and central components interlinked by network intersection structures as described in any embodiment above.

Advantageously, the distance between each passage of the non-rigid elements, and the length and width of each non-rigid element of the device can be chosen according to the purpose of the device.

The device may be constructed in many forms, for example, a cargo net, a ladder, a stretcher or a rescue cradle.

Preferably, kits according to the present invention comprise first and second non-rigid elements and central components according to any embodiments described above.

Preferably, methods of constructing network intersection structures according to the present invention comprise providing a first and second non-rigid element, and central component, according to any embodiment described above.

Advantageously, the method of the present invention may further comprise, at step a), providing a third elongate non-rigid element having a longitudinal axis and a transverse passage extending across the whole width of the third non-rigid element. At step b), the third non-rigid element is passed through the transverse passage of the first non-rigid element so that the transverse passage of the third non-rigid element is in line with the axially-oriented bore, in series with the transverse passage of the second non-rigid element in the direction of the longitudinal axis of the first non-rigid element. At step d), the method further comprises feeding the central component through the transverse passage of the third non-rigid element before feeding it into the part of the axially-oriented bore on the other side of the transverse passage of the first non-rigid element.

Conveniently, in embodiments comprising more than three non-rigid elements, each of the second and more non-rigid elements is positioned within the transverse passage of the first non-rigid element prior to the insertion of the central component into the axially-oriented bore of the first non-rigid component.

Advantageously, the method of the present invention may be repeated with any number of first and second, and optionally third or more non-rigid elements, and central components, to construct devices of the present invention.

In embodiments where the central component is a rigid rod, the central component may simply be pushed into position. In some embodiments, inserts may be used in the assembly of network intersection structures of the present invention, as disclosed above.

In embodiments where the central component is non-rigid, one end of the central component may be fixed to one end of a rigid rod which is fed through the axially-oriented bore and transverse passages of the non-rigid elements. The rigid rod can then be used to draw the non-rigid central component into position in the network intersection. The rod can then be detached from the central component. In alternative embodiments, the non-rigid central component is removably attached to a cord which is, in turn, attached to a guiding rod. The guiding rod is passed through the axially-oriented bore of the first non-rigid element and the transverse passages of the second, and optionally third or more, non-rigid elements. The guiding rod may be passed through the transverse passages and the axially-oriented bore before alignment of the transverse passages of the second, and optionally third or more non-rigid, elements with the axially-oriented bore of the first non-rigid element, or once they are aligned. In embodiments where the guiding rod is passed through the transverse passages and axially-oriented bore before these are aligned, alignment may be facilitated by pulling on the guiding rod and cord. This pulls the transverse passages of the second, and optionally third or more, non-rigid elements into position within the transverse passages of the first non-rigid element and, in the same movement, pulls the central component through the axially-oriented bore and the transverse passages. In embodiments where the transverse passages of second, and optionally third or more, non-rigid elements are aligned with the axially-oriented bore of the first non-rigid element prior to passing the guiding rod therethrough, the central component is positioned within the axially-oriented bore by pulling on the removably attached cord. Once the central component is correctly positioned, the cord is detached from the central component. Accordingly, in some embodiments, step b) of the method of the present invention comprises i) passing the second non-rigid element through a transverse passage of the first non-rigid element, ii) providing a cord having one end removably attached to the central component and the other end attached to a guiding rod, iii) passing the guiding rod through the axially-oriented bore of the first non-rigid element and the transverse passages of the second non-rigid element.

It will be appreciated that, in all embodiments, the distance between each first non-rigid element and the number of transverse passages in the first non-rigid elements may be determined according to the purpose of the device. Furthermore, the number of transverse passages in each second, and optionally third or more, non-rigid element is equal to the number of first non-rigid elements used, and that the distance between these transverse passages corresponds to the distance between each first non-rigid element. Likewise, the number of transverse passages in each first non-rigid element corresponds to the number of second, and optionally third or more, non-rigid elements used, and the distance between each of these transverse passages corresponds to the distance between each second, and optionally third or more, non-rigid element. Once the transverse passages of the second, and optionally third or more, non-rigid elements are aligned with the axially-oriented bore of first non-rigid elements, the central component is passed through the axially-oriented bore and the transverse passages of the first and second, and optionally third or more, non-rigid elements.

Devices comprising a network intersection structure according to the present invention may be secured around their perimeter in order to maintain the structure of the device. The final transverse passage at each end of each first non-rigid element is secured to the second, and optionally third or more, non-rigid element positioned within it. In some embodiments this may be through the use of stitching. However, it is envisaged that other fixing means, such as glue, may be used. In some embodiments, an additional length of first non-rigid element extends beyond the transverse passage of the first non-rigid element located at the periphery of the device, wherein the central component does not extend into the axially-oriented-oriented bore of the additional length. The additional length may be folded over the passage of the first non-rigid element and fixed to the material forming the passage of the first non-rigid element. The additional length of the first non-rigid element may be fixed to the transverse passage by any means, for example, by stitching or gluing.

The network intersection structure of the present invention has the advantage that no stitching is required to secure the intersection elements in place relative to each other. This means that construction of devices is less cumbersome, easier and faster and, therefore, that devices comprising the network intersection of the present invention are cheaper to produce. Furthermore, the network intersection structure of the present invention is not only at least as strong as currently used network intersection structures, but the lack of stitching allows devices to be loaded in two directions, thus effectively improving the strength of devices incorporating the present invention.

The network intersection structures of the present invention may be used to form a netting device comprising at least the first non-rigid element, the second non-rigid element and the central component, optionally also having one or more additional features of any embodiment or aspect of the present invention. Thus, for example it is envisaged that the network intersection structure of the present invention may be used to construct cargo nets. In such devices the central component is a non-rigid material. This allows the net to be flexible and so cradle its load more effectively. The cargo net may be of any shape and size, and the first and second, and optionally third or more, non-rigid elements may be spaced any distance apart. The device is secured only around its perimeter, in order to secure the ends of the first and second, and optionally third or more, non-rigid elements to one another. In some embodiments, the device is secured around its perimeter by stitching. Cargo nets can be extremely large and the lack of stitching within the body of a net incorporating the network intersection of the present invention means that the construction of the net is much easier. Any other type of net may also be constructed using the network intersection of the present invention.

In an alternative embodiment, the present invention is used in the construction of ladders. Two second non-rigid elements form the vertical supports of the ladder, a plurality of first non-rigid elements form the rungs of the ladder, and each central component is a rigid rod. Thus, the rigid rod provides a solid support for the user. In alternative embodiments, there are more than two second non-rigid elements forming the vertical supports, such that more than one person may use the ladder at once. For example, there may be three or four second non-rigid elements forming the vertical supports, such that there are two or three sets of rungs formed by the first non-rigid element and the central components, respectively.

In a further embodiment, the network intersection of the present invention may be incorporated into a device for use as a stretcher or rescue cradle. In some embodiments, a plurality of first non-rigid elements may be positioned close together to increase the surface area supporting the load. When the device is used to carry a person, this also provides greater comfort. In such devices it is preferred that the central component is a rigid rod in order to provide greater support, but in other embodiments the central component may be a non-rigid material.

Features which are presented herein as preferred or optional for a network intersection structure according to one aspect of the present invention may also optionally be incorporated in a kit, method of construction or device according to those other aspects of the invention, unless the context explicitly forbids. Similarly, any feature of a described embodiment may be incorporated as an additional or alternative (as appropriate) feature of any other described embodiment, unless the context explicitly forbids.

The term "substantially" when used herein in connection with a quantity or dimension (including relative quantity or relative dimension) to refer to a variation permissible to a degree that works as intended but preferably means within ±50%, more preferably within ±75% and especially preferably within ±95%.

The term "axially-oriented" is used herein to refer to an orientation that aligns with the longitudinal axis of an element.

The term "non-rigid" is used herein to preferably mean at least flexible in the sense that a rope, tape or cord, when incorporated in an open mesh, can form a loose net capable of holding, carrying or catching a desired load.

The term "webbing" is used herein to refer to any natural or synthetic non-rigid material that is woven and having any cross-sectional shape, for example, circular or flat (to form a tape).

### Brief Description of the

The present invention will now be better explained by way of the following description of preferred embodiments, in which:-
- Figure 1: shows a perspective view of an embodiment of the invention;
- Figure 2: shows a cut away view of the embodiment of the invention of Figure 1;
- Figure 3: shows a perspective view of a first non-rigid element of one embodiment of the invention;
- Figure 4: shows a perspective view of the second non-rigid element of one embodiment of the invention;
- Figure 5: shows a perspective view of an alternative embodiment of the invention;
- Figure 6: shows the construction of a device comprising a plurality of network intersection structures according to one embodiment of the invention;
- Figure 7A: shows a perspective view of an embodiment of a tubular insert positioned within a second non-rigid element, according to one embodiment of the invention;
- Figure 7B: shows the tubular insert and central component of Figure 7A, according to one embodiment of the invention;
- Figure 8: shows a perspective view of an alternative embodiment of a tubular insert, positioned within a second non-rigid element according to one embodiment of the invention;
- Figure 9: shows a cut away view of another embodiment of a network intersection according to the invention; and
- Figure 10: shows a perspective view of a step in the construction of a device comprising a plurality of network intersection structures according to one embodiment of the invention.

Reference letters used in the Figures are as follows:
(a) Length to suit application.
(b) As req'd (i.e. "As required").
(c) Pocket webbing. Width to suit application.
(d) Carbon rod, rope or webbing.
(e) Double pocket integrally woven webbing. Width to suit application.
(f) As req'd (i.e. "As required").
(g) Length to suit application.
(h) 3 Options shown.
   1 Threaded cord.
   2 Rod passed through a tube.
   3 Plug displaced by a rod.
(i) Once the cord has been threaded through all the slots, each slot can be lined up with the aperture in the flange & cord can be tensioned.
(j) Locking webbing.
(k) Lightweight cord pulled through with a needle or flexible rod.
(l) Once all the slots are threaded, align the slots & pockets by pulling this way & draw the locking webbing through.
(m) Solid rod passed through a rigid tube which remains in place.
(n) Bulllit/plug used to open the slot for a rod to pass through. The plug gets pushed out at the end.

### Detailed Description of Preferred Embodiments

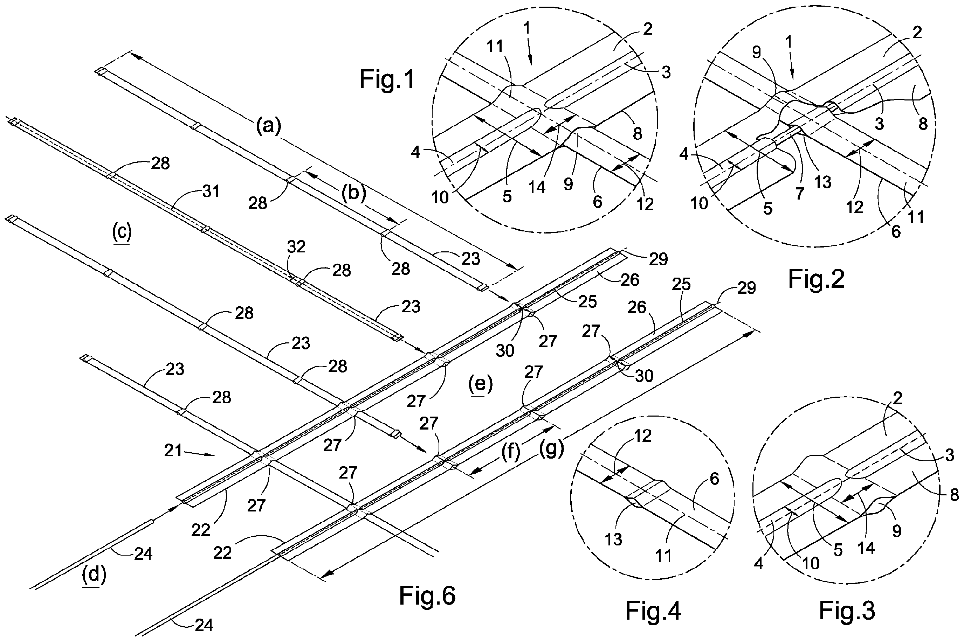

In a first embodiment of the present invention, as exemplified in Figure 1, there is provided a network intersection structure 1 for netting and other net-like devices. The network intersection structure comprises a first elongate non-rigid element 2, a second elongate non-rigid element 6, and an elongate central component 7 (not shown in Figure 1). The first non-rigid element 2 has a longitudinal axis 3, an axially-oriented bore 4 extending for the full length of the first elongate non-rigid element 1 in the direction of the longitudinal axis 3, such that the first non-rigid element 2 is tubular, and a width 5 perpendicular to the longitudinal axis 3. The first non-rigid element 2 of the embodiment of Figure 1 further comprises flanges 8 extending radially from the axially-oriented bore 4 and a transverse passage 9 extending across the whole width 5 of the first non-rigid element 2.

So in summary the second non-rigid element (6) extends through the transverse passage (9) of the first non-rigid element (2) so that the transverse passage of the second non-rigid element is located within the transverse passage (9)_of the first non-rigid element (2) and the transverse passage (13) of the second non-rigid element (6) is aligned with the axially-oriented base (4) of the first non-rigid element (2) and the central component extends through the transverse passage (13) of the second non-rigid element (6).

In the embodiment depicted in Figure 1, the non-rigid elements are made of a woven material, such as webbing. The axially-oriented bore 4 of the first non-rigid element 2 is formed by the weaving process used to make the first non-rigid element 2. In this embodiment, the first non-rigid element 2 is woven at the sides and bifurcates in the middle of the non-rigid element 2, perpendicular to the longitudinal axis 3, to form a bore 4. The axially-oriented bore 4 has a width 10 less than the width 5 of the first non-rigid element 2.

In the embodiment shown by Figure 1 the transverse passage 9 in the first non-rigid element 2 extends for the whole width 5 of the flanges 8 and the axially-oriented bore 4 of the first non-rigid element 2. The transverse passage 9 is formed by the first non-rigid element 2 bifurcating and rejoining in a direction parallel to the longitudinal axis 3 of the first non-rigid element 2, as shown in Figure 3. The transverse passage 9 has a length 14 which is the distance between the point of bifurcation and the point of rejoining of the first non-rigid element 2. It is particularly preferred that the first non-rigid element 2 is a double thickness material and the transverse passage 9 is formed by two single thickness sections of the material, which lie on either side of the second non-rigid element 6.

The network intersection structure 1 of Figure 1 further comprises a second elongate non-rigid element 6 which is made from woven material, for example webbing, having transverse passages at intervals along the length thereof. It comprises a longitudinal axis 11 and a width 12 perpendicular to the longitudinal axis 11. The second non-rigid element 6 also comprises a transverse passage 13 which extends for the whole width 12 of the second non-rigid element 6. As shown in Figure 4, the transverse passage 13 in the second non-rigid element 6 is formed by the non-rigid material bifurcating and rejoining in a direction parallel to the longitudinal axis 11 of the second non-rigid element 6. It is particularly preferred that the second non-rigid element 6 is a double thickness material and the transverse passage 13 is formed by two single thickness sections of the material bifurcating and then rejoining in the direction of the longitudinal axis 11 of the second non-rigid element 6.

The second non-rigid element 6 is positioned within the transverse passage 9 of the first non-rigid element 2. In the embodiment depicted in Figure 1, the second non-rigid element 6 has a longitudinal axis 11 perpendicular to the longitudinal axis 3 of the first non-rigid element 2. In preferred embodiments of the present invention, as depicted in Figure 2, the second non-rigid element 6 is positioned within the transverse passage 9 of the first non-rigid element 2 so that the transverse passage 13 of the second non-rigid element 6 is in line with the axially-oriented bore 4 of the first non-rigid element 2.

An elongate central component 7 is positioned within the axially-oriented bore 4 of the first non-rigid element 2 and the transverse passage 13 of the second non-rigid element 6, and extends in the direction of the longitudinal axis 3 of the first non-rigid element 2. Thus, the single thickness sections of the material of the second non-rigid element 6, forming the transverse passage 13 of the second non-rigid element 6, lie on either side of the central component 7. The single thickness sections forming the transverse passage 9 of the first non-rigid element 2 lie on either side of the second non-rigid element 6 and the central component 7.

In the embodiment depicted in Figure 2, the central component 7 is a rigid rod. However, in alternative embodiments, the central component 7 may be non-rigid, for example it may be a woven material, such as webbing, or moulded or extruded, such as wire.

In the embodiment depicted in Figure 1, the passage 9 in the first non-rigid element 2 has a length 14 parallel to the direction of the longitudinal axis 3 of the first non-rigid element 2. The length 14 of the transverse passage 9 in the first non-rigid element 2 is substantially the same as the width 12 of the second non-rigid element 6.

Each of the first non-rigid element 2, the axially-oriented bore 4 of the first non-rigid element 2 and the second non-rigid element 6 can be of any width, according to the requirements of the user.

Figure 1 shows a preferred embodiment of the invention, wherein there is a single non-rigid element 6 within the transverse passage 9 of the first non-rigid element 2. In other embodiments, there may be more than one non-rigid element passing through the transverse passage 9 of the first non-rigid element 2.

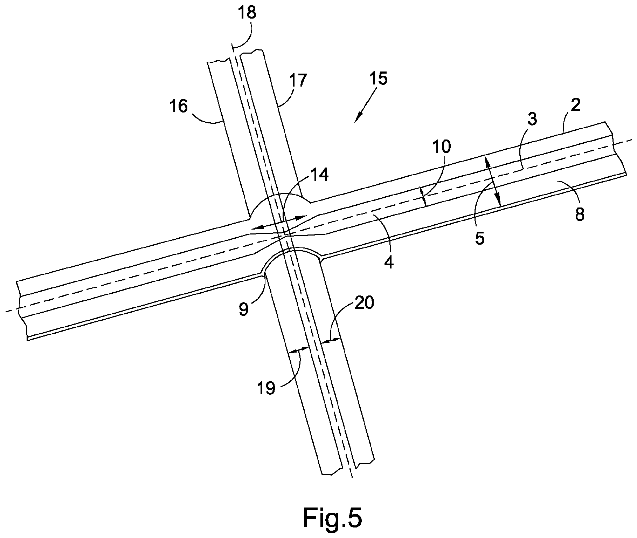

Figure 5 shows an alternative embodiment of a network intersection structure according to the present invention, wherein the network intersection 15 comprises first, second and third elongate non-rigid elements, and an elongate central component. In this embodiment, the first, second and third non-rigid elements are made of woven material, such as webbing. The first elongate non-rigid element 2 has a longitudinal axis 3, an axially-oriented bore 4 extending for the full length of the first elongate non-rigid element 1 in the direction of the longitudinal axis 3, such that the first non-rigid element 2 is tubular, and a width 5 perpendicular to the longitudinal axis 3. The first non-rigid element 2 of Figure 5 also comprises flanges 8 extending radially from the axially-oriented bore 4 and a transverse passage 9 extending across the whole width 5 of the first non-rigid element 2. The transverse passage 9 in the first non-rigid element 2 has a length 14 parallel to the longitudinal axis 3 of the first non-rigid element 2.

In the embodiment depicted in Figure 5, the axially-oriented bore 4 of the first non-rigid element 2 is formed by the weaving process used to make the first non-rigid element 2. In this embodiment, the first non-rigid element 2 is woven at the sides and bifurcates in the middle of the element 2 to form a bore 4, such that the axially-oriented bore 4 has a width 10 less than the width 5 of the first non-rigid element 2.

In the embodiment shown in Figure 5 the transverse passage 9 in the first non-rigid element 2 extends for the whole width 5 of the flanges 8 and the axially-oriented bore 4 of the first non-rigid element 2. The transverse passage 9 is formed by the first non-rigid element 2 bifurcating and rejoining in the direction of the longitudinal axis 3, as shown in Figure 3.

The network intersection 15 of Figure 5 further comprises a second and a third elongate non-rigid element 16, 17 which share a longitudinal axis 18, such that they are parallel, wherein each of the second and third non-rigid elements 16, 17 has a width 19, 20 perpendicular to the longitudinal axis of the relevant non-rigid element. The second and third non-rigid elements 16, 17 each comprise a transverse passage (not shown in Figure 5) which extends across the whole width 19, 20 of the respective non-rigid element. The transverse passage in each of the second and third non-rigid elements 16, 17 is formed in a similar manner to the transverse passage (13) of the second non-rigid element 6 shown in Figure 4, i.e. by the material bifurcating and rejoining in the direction of the longitudinal axis 18. It is particularly preferred that each of the second and third non-rigid elements 16, 17 is a double thickness material and the transverse passage is formed by two single thickness sections of the material bifurcating and then rejoining in a direction parallel to the longitudinal axis 18 of the second and third non-rigid elements 16, 17.

Each of the second and third non-rigid elements 16, 17 has a width 19, 20 less than the length 14 of the transverse passage 9 of the first non-rigid element 2. Preferably, the width 19, 20 of each of the second and third non-rigid elements 16, 17 is half of the length 14 of the transverse passage 9 of the first non-rigid element 2, such that the second and third non-rigid elements 16, 17 may lie adjacent one another within the transverse passage 9 such that the transverse passages of the second and third non-rigid elements 16, 17 are in series.

The second and third non-rigid elements 16, 17 both pass through the transverse passage 9 of the first non-rigid element 2 such that the transverse passage of each of the second and third non-rigid elements 16, 17 is positioned within the transverse passage 9 of the first non-rigid element 2, in line with the axially-oriented bore 4 of the first non-rigid element 2. The second and third non-rigid elements 16, 17 are positioned in series in the direction of the longitudinal axis 3 of the first non-rigid element 2. In the embodiment shown in Figure 5, the shared longitudinal axis 18 of the second and third non-rigid elements 16, 17 is perpendicular to the longitudinal axis 3 of the first non-rigid element 2.

The network intersection 15 further comprises an elongate central component (not shown) similar to that depicted in Figure 2. The central component is positioned in the axially-oriented bore 4 of the first non-rigid element 2 and the passage of each of the second and third non-rigid elements 16, 17, and extends in the same direction as the longitudinal axis 3 of the first non-rigid element 2. Thus, the single thickness sections of the material of each of the second and third non-rigid elements 16, 17, forming the transverse passage of each of the second and third non-rigid elements 16, 17, lie on either side of the central component. The single thickness sections forming the transverse passage 9 of the first non-rigid element 2 lie on either side of the second and third non-rigid elements 16, 17 and the central component.

As described in reference to Figures 1 and 2, the central component of the embodiment shown in Figure 5 may be a rigid rod or a non-rigid material, such as a woven material, for example, webbing, or a moulded or extruded material, for example a polymer.

The present invention also encompasses devices, such as nets, ladders, stretchers and cradles, which comprise at least one network intersection as described above. Figure 6 shows the construction of a device 21 according to the present invention comprising a plurality of network intersection structures. The device 21 of Figure 6 comprises two first elongate non-rigid elements 22, four second elongate non-rigid elements 23 and two central components 24. However, in other embodiments, any number of first and second, and optionally third or more, non-rigid elements and central components may be used. In this embodiment each of the first non-rigid elements comprises a longitudinal axis 29, a width 30 perpendicular to the longitudinal axis 29, an axially-oriented bore 25 extending in the direction of the longitudinal axis 29, flanges 26 extending radially from the axially-oriented bore 25 and at least one transverse passage 27 extending across the whole width 30 of the first non-rigid element 21. Each second non-rigid element 23 comprises a longitudinal axis 31, a width 32 perpendicular to the longitudinal axis 31 and at least one transverse passage 28 extending across the whole width 32 of the second non-rigid element 23. In the embodiment shown in Figure 6, the construction of each network intersection is the same as previously described in relation to Figures 1-4.

In alternative embodiments, devices may have network intersection structures constructed according to the embodiment shown in Figure 5. Thus, a network intersection of the device may have a third elongate non-rigid element in addition to the second non-rigid element. In further embodiments, a network intersection of the device may comprise more than two elongate non-rigid elements passing through the transverse passage of the first non-rigid element.

In alternative embodiments, there may be a plurality of first non-rigid elements and second, and optionally third or more, non-rigid elements. The transverse passages of the first non-rigid element, and the transverse passages of the second, and optionally third or more, non-rigid element, are positioned at intervals along the length of the relevant non-rigid element.

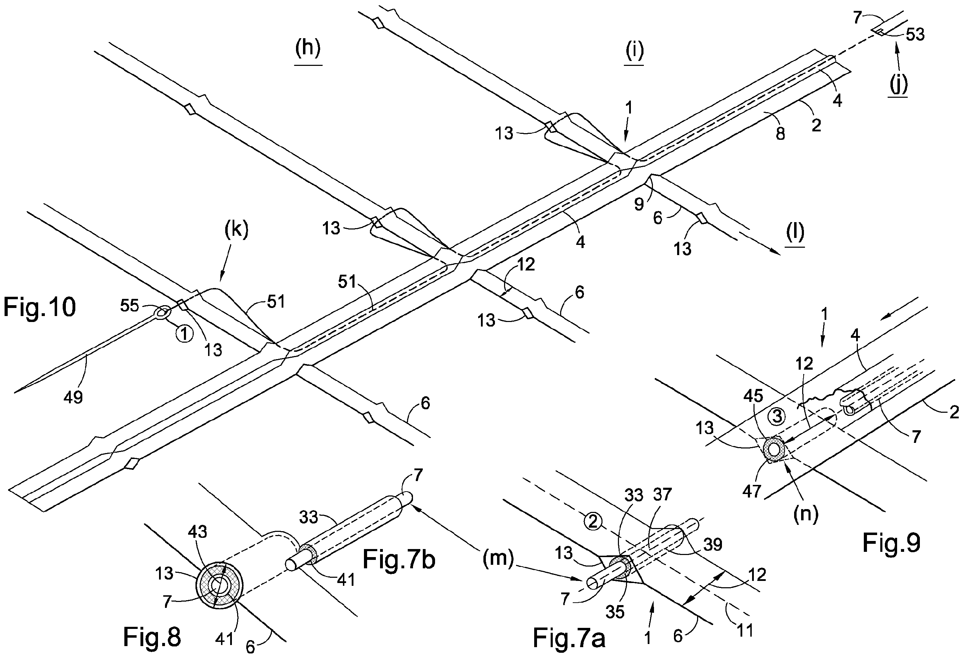

Figure 7A shows an alternative embodiment of the network intersection 1 further comprising an insert 33 in the form of a tubular rigid rod positioned in the transverse passage 13 of the second non-rigid element 6 (the first non-rigid element is not shown). The insert 33 is positioned within the transverse passage 13 so that the open ends 35 of the insert 33 face the open edges of the transverse passage 13. In the embodiment shown in Figure 7, the tubular insert 33 is positioned so that its longitudinal axis 37 is perpendicular to the longitudinal axis 11 of the second non-rigid element 6, and the tubular insert 33 has a length 39 which is the same as the width 12 of the second non-rigid element 6. The central component 7 passes through the lumen on the tubular insert 33, so that the tubular insert 33 stays in place within the transverse passage 13 of the second non-rigid element 6 when the network intersection 1 is assembled.

Figure 7B shows the tubular insert 33 of Figure 7A with the second non-rigid element 6 not shown. The central component 7 passes through the lumen 41 of the tubular insert 33.

Figure 8 shows a variation of the insert 33 of Figures 7A and B that may be used in the present invention. While the insert 33 itself is the similar in shape to that depicted in Figure 7A and B, the insert has a larger diameter 43 than the insert 33 of Figures 7A and B, such that it fits more snugly into the transverse passage 13 of the second non-rigid element 6.

Figure 9 shows an alternative embodiment of an insert that may be used in the network intersections and structures of the present invention. In this embodiment the insert 45 is a non-tubular rod. The insert 45 is positioned within the transverse passage 13 of the second non-rigid element 6 so that the ends 47 (only one end shown) of the insert 45 face the open edge of the transverse passage 13. As with the embodiments shown in Figures 7A and 8, the insert 45 has a length which is the same as the width of the transverse passage 13. In this embodiment, the central component 7 is a rigid rod. During assembly of the network intersection 1, the central component 7 is passed through the axially-oriented bore 4 of the first non-rigid element 2 and pushes the insert 45 out of the transverse passage 13 of the second non-rigid element 6. The insert 45 is pushed, by the central component 7, to the end of the axially-oriented bore 4 of the first non-rigid element 2, where it can be removed. Thus, once the network intersection 1 is assembled, the insert 45 is not present within the transverse passage 13 of the second non-rigid element 6.

The present invention also provides a method for assembling the network intersection structures described above. Referring to a single network intersection of Figure 6, the method comprises providing a first elongate non-rigid element 22 comprising a longitudinal axis 29, a width 30 perpendicular to the longitudinal axis 29, an axially-oriented bore 25 and a transverse passage 27 extending across the whole width 30 of the first non-rigid element 22. A second elongate non-rigid element 23 is also provided, wherein the second non-rigid element 23 comprises a longitudinal axis 31, a width 32 perpendicular to the longitudinal axis 31 and at least one transverse passage 28 extending across the whole width 32 of the second non-rigid element 23. An elongate central component 24 is also provided. The method further comprises passing the second non-rigid element 23 through the transverse passage 27 of the first non-rigid element 22 until the transverse passage 28 of the second non-rigid element 23 is positioned within the transverse passage 27 of the first non-rigid element 22, in line with the axially-oriented bore 25. The central component 24 is inserted into the axially-oriented bore 25, through one end of the axially-oriented bore 25, and is fed through the axially-oriented bore 25, through the transverse passage 28 of the second non-rigid element 23, and into the part of the axially-oriented bore 25 on the other side of the transverse passage 27 of the first non-rigid element 22.

The method may further comprise providing a third elongate non-rigid element comprising a longitudinal axis, a width perpendicular to the longitudinal axis and a transverse passage extending across the whole width of the third non-rigid element. Prior to insertion of the central component, the third non-rigid element is passed through the transverse passage 27 of the first non-rigid element 22 so that the transverse passage of the third non-rigid element is in line with the axially-oriented bore 25 of the first non-rigid element 22, in series with the transverse passage 28 of the second non-rigid element 23 in the direction if the longitudinal axis 29 of the first non-rigid element 22. The central component is then fed through the axially-oriented bore 25, the transverse passage 28 of the second non-rigid element 23 and the transverse passage of the third non-rigid element, and into the part of the axially-oriented bore 25 on the other side of the transverse passage 27 of the first non-rigid element 22.

Figure 10 shows another embodiment of the method of assembly of network intersections according to the present invention. In this embodiment, a second non-rigid element 6 is passed through each transverse passage 9 of the first non-rigid element 2. The central component 7 is removably attached to a first end 53 of a cord 51, and the second end 55 of the cord 51 is secured to a guiding rod 49. In this embodiment, the guiding rod 49 is in the form of a needle, but other types of guiding rods are also envisaged and these can be easily identified by those skilled in the art. The guiding rod 49 is threaded through the axially-oriented bore 4 of the first non-rigid element 2 and the transverse passages 13 of the second non-rigid elements 6, thereby threading the cord 51 through the bore 4 and transverse passages 13. The cord 51 can then be pulled through the transverse slots 13 and the axially-oriented bore 4. This tensioning of the cord pulls the second non-rigid elements 6 further through the transverse passages 9 of the first non-rigid element 2, so that the transverse passages 13 of the second non-rigid element 6 become aligned with the axially-oriented bore 4 of the first non-rigid element 2. Pulling the cord 51 also draws the central component 7 through the axially-oriented bore 4 and the transverse passages 13 of the second non-rigid elements 6. Thus, the cord 51 ensures that the transverse slots 13 of the second non-rigid element 6 are correctly aligned with the axially-oriented bore 4 of the first non-rigid element 2, and further provides easy positioning of the central component 7. In other embodiments, it is envisaged that the transverse passages 13 of the second non-rigid element 6 will be aligned with the axially-oriented bore 4 of the first non-rigid element 2 before the guiding rod 49 and cord 51 are threaded through.
The embodiments described herein are not limiting and it is envisaged that other materials may be used and that other devices may incorporate the network intersection structure of the present invention. Thus, modifications of those embodiments, as well as other embodiments, all within the scope of the appended claims or described aspects of the invention, will now become apparent to persons skilled in the art.

## Claims

1. A network intersection structure (1) for a cargo net, a ladder, a stretcher or a rescue cradle, the network intersection comprising a first elongate non-rigid element (2), a second elongate non-rigid element (6) and an elongate central component (7), wherein:
the first non-rigid element (2) comprises a longitudinal axis (3), a width (5) perpendicular to the longitudinal axis (3), an axially-oriented bore (4) and a transverse passage (9) extending across the whole width (5) of the first non-rigid element (2),
the second non-rigid element (6) comprises a longitudinal axis (11), a width (12) perpendicular to the longitudinal axis (11) and a transverse passage (13) extending across the whole width (12) of the second non-rigid element (6), and
the central component (7) is positioned within the axially-oriented bore (4) of the first non-rigid element (2) and the transverse passages (9, 13) of the first and second non-rigid elements (2, 6).

2. A network intersection structure (1) according to claim 1, wherein the transverse passage (13) of the second non-rigid element (6) is located within the transverse passage (9) of the first non-rigid element (2).

3. A network intersection structure (1) according claim 1 or claim 2, wherein the transverse passage (13) of the second non-rigid element (6) is aligned with the axially-oriented bore (4) of the first non-rigid element (2).

4. A network intersection structure (1) according to any of the preceding claims, wherein the first non-rigid element (2) and the second non-rigid element (6) are secured in position relative to each other without the use of stitching.

5. A network intersection structure (1) according to any of the preceding claims, wherein the second non-rigid element (6) fits snugly within the transverse passage (9) of the first non-rigid element (2).

6. A network intersection structure (1) according to any of the preceding claims, wherein the first non-rigid element (2) comprises at least one flange (8) extending radially from the axially-oriented bore (4).

7. A network intersection structure (1) according to any of the preceding claims, wherein the longitudinal axis (11) of the second non-rigid element (6) is between 45° and 90° to the longitudinal axis (3) of the first non-rigid element (2), preferably at substantially 90° to the longitudinal axis (3) of the first non-rigid element (2).

8. A network intersection structure (1) according to any of the preceding claims, wherein the second non-rigid element (6) further comprises an insert within the transverse passage (13) of the second non-rigid element (6).

9. A network intersection structure (1) according to claim 8, wherein the insert is tubular and has a diameter such that the central component (7) can pass freely through said tubular insert, or the insert can be displaced from the transverse passage (13) upon insertion of the central element (7), preferably wherein the insert is a non-tubular rod.

10. A network intersection structure (1) according to any of the preceding claims, wherein the central component (7) is made of a non-rigid material.

11. A network intersection structure (1) according to any one of claims 1-9, wherein the central component (7) is a rigid rod.

12. A network intersection structure (1) according to any of the preceding claims, wherein at least one of the non-rigid elements and/or the central component (7) is made from a polymer, a composite material, metal or fibre, preferably wherein the first non-rigid element (2) and/or the second non-rigid element is made of webbing.

13. A network intersection structure (1) according to any one of claims 1-4, wherein the structure comprises a third elongate non-rigid element (17) having a longitudinal axis (18), a width (20) perpendicular to the longitudinal axis (18), and a transverse passage extending across the whole width (20) of the third non-rigid element (17), preferably wherein the transverse passage of the third elongate non-rigid element (17) is located within the transverse passage of the first non-rigid element (2), in series with the transverse passage (9) of the second non-rigid element (6) in the direction of the longitudinal axis (3) of the first non-rigid element (2).

14. A network intersection structure (1) according to claim 13, wherein the second non-rigid element (6) and the third non-rigid element (17) share a longitudinal axis (18), or the longitudinal axis (11) of the second non-rigid element (6) is not parallel to longitudinal axis (18) of the third non-rigid element (17), preferably wherein the longitudinal axis (11) of the second non-rigid element (6) is between 5° and 75° to the longitudinal axis (18) of the third non-rigid element (17).

15. A kit for assembly of a network intersection according to claim 1, wherein the kit comprises:
a first elongate non-rigid element (2) comprising a longitudinal axis (3), a width (5) perpendicular to the longitudinal axis (3), an axially-oriented bore (4) and a transverse passage (9) extending across the whole width (5) of the first non-rigid element (2),
a second elongate non-rigid element (6) comprising a longitudinal axis (11), a width (12) perpendicular to the longitudinal axis (11) and a transverse passage (13) extending across the whole width (12) of the second non-rigid element (6), and
an elongate central component (7).

16. A method of constructing a network intersection structure (1) comprising:
a. providing:
i. a first elongate non-rigid element (2) comprising a longitudinal axis (3), a width (5) perpendicular to the longitudinal axis (3), an axially-oriented bore (4) and a transverse passage (9) extending across the whole width (5) of the first non-rigid element (2),
ii. a second elongate non-rigid element (6) comprising a longitudinal axis (11), a width (12) perpendicular to the longitudinal axis (11) and a transverse passage (13) extending across the whole width (12) of the second non-rigid element (6), and
iii. an elongate central component (7),
b. passing the second non-rigid element (6) through a transverse passage (9) of the first non-rigid element (2) until the transverse passage (9) of the second non-rigid element (6) is positioned within the transverse passage (9) of the first non-rigid element (2), in line with the axially-oriented bore (4),
c. inserting the central component (7) into the axially-oriented bore (4), through one end of the axially-oriented bore (4), and
d. feeding the central component (7) through the axially-oriented bore (4), through the transverse passage (13) of the second non-rigid element (6), and into the part of the axially-oriented bore (4) on the other side of the transverse passage (9) of the first non-rigid element (2), preferably wherein the method further comprises,
e. at step a), providing a third elongate non-rigid element (17) having a longitudinal axis (18), a width (20) perpendicular to the longitudinal axis (18) and a transverse passage extending across the whole width (20) of the third non-rigid element (17),
f. at step b), passing the third non-rigid element (17) through the transverse passage (9) of the first non-rigid element (2) so that the transverse passage of the third non-rigid element (17) is in line with the axially-oriented bore (4), in series with the transverse passage (13) of the second non-rigid element (6) in the direction of the longitudinal axis (3) of the first non-rigid element (2), and
g. at step d), feeding the central component (7) through the transverse passage of the third non-rigid element (17) before feeding it into the part of the axially-oriented bore (4) on the other side of the transverse passage (9) of the first non-rigid element (2).

## Patentansprüche

1. Netzkreuzungspunktstruktur (1) für ein Ladungsnetz, eine Leiter, eine Trage oder einen Rettungskorb, wobei der Netzkreuzungspunkt ein erstes langgestrecktes, nicht starres Element (2), ein zweites langgestrecktes, nicht starres Element (6) und eine langgestreckte Zentralkomponente (7) umfasst, worin:
das erste nicht starre Element (2) eine Längsachse (3), eine Breite (5) senkrecht zur Längsachse (3), eine axial ausgerichtete Bohrung (4) und einen Querkanal (9) umfasst, der sich über die gesamte Breite (5) des ersten nicht starren Elements (2) erstreckt,
das zweite nicht starre Element (6) eine Längsachse (11), eine Breite (12) senkrecht zur Längsachse (11) und einen Querkanal (13) umfasst, der sich über die gesamte Breite (12) des zweiten nicht starren Elements (6) erstreckt, und
die Zentralkomponente (7) innerhalb der axial ausgerichteten Bohrung (4) des ersten nicht starren Elements (2) und der Querkanäle (9, 13) des ersten und des zweiten nicht starren Elements (2, 6) angeordnet ist.

2. Netzkreuzungspunktstruktur (1) nach Anspruch 1, worin der Querkanal (13) des zweiten nicht starren Elements (6) innerhalb des Querkanals (9) des ersten nicht starren Elements (2) angeordnet ist.

3. Netzkreuzungspunktstruktur (1) nach Anspruch 1 oder Anspruch 2, worin der Querkanal (13) des zweiten nicht starren Elements (6) mit der axial ausgerichteten Bohrung (4) des ersten nicht starren Elements (2) fluchtet.

4. Netzkreuzungspunktstruktur (1) nach einem der vorhergehenden Ansprüche, worin das erste nicht starre Element (2) und das zweite nicht starre Element (6) ohne die Verwendung von Nähen relativ zueinander in Position fixiert werden.

5. Netzkreuzungspunktstruktur (1) nach einem der vorhergehenden Ansprüche, worin das zweite nicht starre Element (6) eng in den Querkanal (9) des ersten nicht starren Elements (2) passt.

6. Netzkreuzungspunktstruktur (1) nach einem der vorhergehenden Ansprüche, worin das erste nicht starre Element (2) mindestens einen Steg (8) umfasst, der sich radial von der axial ausgerichteten Bohrung (4) erstreckt.

7. Netzkreuzungspunktstruktur (1) nach einem der vorhergehenden Ansprüche, worin die Längsachse (11) des zweiten nicht starren Elements (6) zwischen 45° und 90° zur Längsachse (3) des ersten nicht starren Elements (2) liegt, vorzugsweise im Wesentlichen 90° zur Längsachse (3) des ersten nicht starren Elements (2).

8. Netzkreuzungspunktstruktur (1) nach einem der vorhergehenden Ansprüche, worin das zweite nicht starre Element (6) ferner einen Einsatz innerhalb des Querkanals (13) des zweiten nicht starren Elements (6) umfasst.

9. Netzkreuzungspunktstruktur (1) nach Anspruch 8, worin der Einsatz röhrenförmig ist und einen solchen Durchmesser hat, dass die Zentralkomponente (7) frei durch den röhrenförmigen Einsatz hindurchgehen kann, oder der Einsatz beim Einsetzen der Zentralkomponente (7) aus dem Querkanal (13) verschoben werden kann, worin der Einsatz vorzugsweise eine nicht röhrenförmige Stange ist.

10. Netzkreuzungspunktstruktur (1) nach einem der vorhergehenden Ansprüche, worin die Zentralkomponente (7) aus einem nicht starren Material hergestellt ist.

11. Netzkreuzungspunktstruktur (1) nach einem der Ansprüche 1 bis 9, worin die Zentralkomponente (7) eine starre Stange ist.

12. Netzkreuzungspunktstruktur (1) nach einem der vorhergehenden Ansprüche, worin mindestens eines der nicht starren Elemente und/oder der Zentralkomponente (7) aus einem Polymer, einem Verbundmaterial, Metall oder Fasern hergestellt ist, worin das erste nicht starre Element (2) und/oder das zweite nicht starre Element vorzugsweise aus Gurtband besteht.

13. Netzkreuzungspunktstruktur (1) nach einem der Ansprüche 1 bis 4, worin die Struktur ein drittes langgestrecktes, nicht starres Element (17) mit einer Längsachse (18), einer Breite (20) senkrecht zur Längsachse (18) und einem Querkanal umfasst, der sich über die gesamte Breite (20) des dritten nicht starren Elements (17) erstreckt, worin der Querkanal des dritten langgestreckten, nicht starren Elements (17) vorzugsweise innerhalb des Querkanals des ersten nicht starren Elements (2) in Reihe mit dem Querkanal (9) des zweiten nicht starren Elements (6) in Richtung der Längsachse (3) des ersten nicht starren Elements (2) angeordnet ist.

14. Netzkreuzungspunktstruktur (1) nach Anspruch 13, worin das zweite nicht starre Element (6) und das dritte nicht starre Element (17) eine Längsachse (18) gemeinsam haben oder die Längsachse (11) des zweiten nicht starren Elements (6) nicht parallel zur Längsachse (18) des dritten nicht starren Elements (17) ist, worin die Längsachse (11) des zweiten nicht starren Elements (6) vorzugsweise zwischen 5° und 75° zur Längsachse (18) des dritten nicht starren Elements (17) liegt.

15. Bausatz zur Montage eines Netzkreuzungspunkts nach Anspruch 1, worin der Bausatz umfasst:
ein erstes langgestrecktes, nicht starres Element (2), das eine Längsachse (3), eine Breite (5) senkrecht zur Längsachse (3), eine axial ausgerichtete Bohrung (4) und einen Querkanal (9), der sich über die gesamte Breite (5) des ersten, nicht starren Elements (2) erstreckt, umfasst,
ein zweites langgestrecktes, nicht starres Element (6), das eine Längsachse (11), eine Breite (12) senkrecht zur Längsachse (11) und einen Querkanal (13), der sich über die gesamte Breite (12) des zweiten, nicht starren Elements (6) erstreckt, umfasst, und
eine langgestreckte Zentralkomponente (7).

16. Verfahren zum Konstruieren einer Netzkreuzungspunktstruktur (1), umfassend:
a. Bereitstellen:
i. eines ersten langgestreckten, nicht starren Elements (2), das eine Längsachse (3), eine Breite (5) senkrecht zur Längsachse (3), eine axial ausgerichtete Bohrung (4) und einen Querkanal (9), der sich über die gesamte Breite (5) des ersten, nicht starren Elements (2) erstreckt, umfasst,
ii. eines zweiten langgestreckten, nicht starren Elements (6), das eine Längsachse (11), eine Breite (12) senkrecht zur Längsachse (11) und einen Querkanal (13), der sich über die gesamte Breite (12) des zweiten, nicht starren Elements (6) erstreckt, umfasst, und
iii. einer langgestreckten Zentralkomponente (7),
b. Hindurchführen des zweiten nicht starren Elements (6) durch einen Querkanal (9) des ersten nicht starren Elements (2), bis der Querkanal (9) des zweiten nicht starren Elements (6) innerhalb des Querkanals (9) des ersten nicht starren Elements (2) in Flucht mit der axial ausgerichteten Bohrung (4) positioniert ist,
c. Einsetzen der Zentralkomponente (7) in die axial ausgerichtete Bohrung (4) durch ein Ende der axial ausgerichteten Bohrung (4), und
d. Einführen der Zentralkomponente (7) durch die axial ausgerichtete Bohrung (4), durch den Querkanal (13) des zweiten nicht starren Elements (6) und in den Teil der axial ausgerichteten Bohrung (4) auf der anderen Seite des Querkanals (9) des ersten nicht starren Elements (2), worin das Verfahren vorzugsweise ferner umfasst:
e. in Schritt a), Bereitstellen eines dritten langgestreckten, nicht starren Elements (17) mit einer Längsachse (18), einer Breite (20) senkrecht zur Längsachse (18) und einem Querkanal, der sich über die gesamte Breite (20) des dritten, nicht starren Elements (17) erstreckt,
f. in Schritt b) Hindurchführen des dritten nicht starren Elements (17) durch den Querkanal (9) des ersten nicht starren Elements (2), sodass der Querkanal des dritten nicht starren Elements (17) mit der axial ausgerichteten Bohrung (4) fluchtet und in Reihe mit dem Querkanal (13) des zweiten nicht starren Elements (6) in Richtung der Längsachse (3) des ersten nicht starren Elements (2) liegt, und
g. in Schritt d) Einführen der Zentralkomponente (7) durch den Querkanal des dritten nicht starren Elements (17), bevor sie in den Teil der axial ausgerichteten Bohrung (4) auf der anderen Seite des Querkanals (9) des ersten nicht starren Elements (2) eingeführt wird.

## Revendications

1. Structure d'intersection de réseau (1) pour un filet de chargement, une échelle, un brancard ou un arceau de sauvetage, l'intersection de réseau comprenant un premier élément non rigide allongé (2), un deuxième élément non rigide allongé (6) et un composant central allongé (7) ; dans laquelle :
le premier élément non rigide (2) comprend un axe longitudinal (3), une largeur (5) qui est perpendiculaire à l'axe longitudinal (3), un alésage orienté axialement (4) et un passage transversal (9) qui s'étend sur la totalité de la largeur (5) du premier élément non rigide (2) ;
le deuxième élément non rigide (6) comprend un axe longitudinal (11), une largeur (12) qui est perpendiculaire à l'axe longitudinal (11) et un passage transversal (13) qui s'étend sur la totalité de la largeur (12) du deuxième élément non rigide (6) ; et
le composant central (7) est positionné à l'intérieur de l'alésage orienté axialement (4) du premier élément non rigide (2) et des passages transversaux (9, 13) des premier et deuxième éléments non rigides (2, 6).

2. Structure d'intersection de réseau (1) selon la revendication 1, dans laquelle le passage transversal (13) du deuxième élément non rigide (6) est localisé à l'intérieur du passage transversal (9) du premier élément non rigide (2).

3. Structure d'intersection de réseau (1) selon la revendication 1 ou la revendication 2, dans laquelle le passage transversal (13) du deuxième élément non rigide (6) est aligné avec l'alésage orienté axialement (4) du premier élément non rigide (2).

4. Structure d'intersection de réseau (1) selon l'une quelconque des revendications qui précèdent, dans laquelle le premier élément non rigide (2) et le deuxième élément non rigide (6) sont fixés de façon sécurisée en position l'un par rapport à l'autre sans l'utilisation d'une couture.

5. Structure d'intersection de réseau (1) selon l'une quelconque des revendications qui précèdent, dans laquelle le deuxième élément non rigide (6) est ajusté de façon serrée à l'intérieur du passage transversal (9) du premier élément non rigide (2).

6. Structure d'intersection de réseau (1) selon l'une quelconque des revendications qui précèdent, dans laquelle le premier élément non rigide (2) comprend au moins une bride (8) qui s'étend radialement depuis l'alésage orienté axialement (4).

7. Structure d'intersection de réseau (1) selon l'une quelconque des revendications qui précèdent, dans laquelle l'axe longitudinal (11) du deuxième élément non rigide (6) est entre 45° et 90° par rapport à l'axe longitudinal (3) du premier élément non rigide (2), de préférence à sensiblement 90° par rapport à l'axe longitudinal (3) du premier élément non rigide (2).

8. Structure d'intersection de réseau (1) selon l'une quelconque des revendications qui précèdent, dans laquelle le deuxième élément non rigide (6) comprend en outre un insert à l'intérieur du passage transversal (13) du deuxième élément non rigide (6).

9. Structure d'intersection de réseau (1) selon la revendication 8, dans laquelle l'insert est tubulaire et il présente un diamètre qui est tel que le composant central (7) peut passer librement au travers dudit insert tubulaire, ou l'insert peut être déplacé par rapport au passage transversal (13) suite à l'insertion de l'élément central (7), de préférence dans laquelle l'insert est une tige non tubulaire.

10. Structure d'intersection de réseau (1) selon l'une quelconque des revendications qui précèdent, dans laquelle le composant central (7) est réalisé en un matériau non rigide.

11. Structure d'intersection de réseau (1) selon l'une quelconque des revendications 1 à 9, dans laquelle le composant central (7) est une tige rigide.

12. Structure d'intersection de réseau (1) selon l'une quelconque des revendications qui précèdent, dans laquelle au moins l'un des éléments non rigides et/ou du composant central (7) est réalisé à partir d'un polymère, d'un matériau composite, d'un métal ou d'une fibre, de préférence dans laquelle le premier élément non rigide (2) et/ou le deuxième élément non rigide sont/est réalisé(s) à partir d'un matériau de sanglage.

13. Structure d'intersection de réseau (1) selon l'une quelconque des revendications 1 à 4, dans laquelle la structure comprend un troisième élément non rigide allongé (17) qui comporte un axe longitudinal (18), une largeur (20) qui est perpendiculaire à l'axe longitudinal (18) et un passage transversal qui s'étend sur toute la largeur (20) du troisième élément non rigide (17), de préférence dans laquelle le passage transversal du troisième élément non rigide allongé (17) est localisé à l'intérieur du passage transversal du premier élément non rigide (2), en série avec le passage transversal (9) du deuxième élément non rigide (6) dans la direction de l'axe longitudinal (3) du premier élément non rigide (2).

14. Structure d'intersection de réseau (1) selon la revendication 13, dans laquelle le deuxième élément non rigide (6) et le troisième élément non rigide (17) partagent un axe longitudinal (18), ou l'axe longitudinal (11) du deuxième élément non rigide (6) n'est pas parallèle à l'axe longitudinal (18) du troisième élément non rigide (17), de préférence dans laquelle l'axe longitudinal (11) du deuxième élément non rigide (6) est entre 5° et 75° par rapport à l'axe longitudinal (18) du troisième élément non rigide (17).

15. Kit pour l'assemblage d'une intersection de réseau selon la revendication 1, dans lequel le kit comprend :
un premier élément non rigide allongé (2) qui comprend un axe longitudinal (3), une largeur (5) qui est perpendiculaire à l'axe longitudinal (3), un alésage orienté axialement (4) et un passage transversal (9) qui s'étend sur la totalité de la largeur (5) du premier élément non rigide (2) ;
un deuxième élément non rigide allongé (6) qui comprend un axe longitudinal (11), une largeur (12) qui est perpendiculaire à l'axe longitudinal (11) et un passage transversal (13) qui s'étend sur la totalité de la largeur (12) du deuxième élément non rigide (6) ; et
un composant central allongé (7).

16. Procédé de construction d'une structure d'intersection de réseau (1) comprenant :
a. la fourniture :
i. d'un premier élément non rigide allongé (2) qui comprend un axe longitudinal (3), une largeur (5) qui est perpendiculaire à l'axe longitudinal (3), un alésage orienté axialement (4) et un passage transversal (9) qui s'étend sur la totalité de la largeur (5) du premier élément non rigide (2) ;
ii. d'un deuxième élément non rigide allongé (6) qui comprend un axe longitudinal (11), une largeur (12) qui est perpendiculaire à l'axe longitudinal (11) et un passage transversal (13) qui s'étend sur la totalité de la largeur (12) du deuxième élément non rigide (6) ; et
iii. d'un composant central allongé (7) ;
b. le passage du deuxième élément non rigide (6) au travers d'un passage transversal (9) du premier élément non rigide (2) jusqu'à ce que le passage transversal (9) du deuxième élément non rigide (6) soit positionné à l'intérieur du passage transversal (9) du premier élément non rigide (2), en ligne avec l'alésage orienté axialement (4) ;
c. l'insertion du composant central (7) à l'intérieur de l'alésage orienté axialement (4), au travers d'une extrémité de l'alésage orienté axialement (4) ; et
d. l'introduction du composant central (7) au travers de l'alésage orienté axialement (4), au travers du passage transversal (13) du deuxième élément non rigide (6) et à l'intérieur de la partie de l'alésage orienté axialement (4) sur l'autre côté du passage transversal (9) du premier élément non rigide (2) ; dans lequel :
de préférence, le procédé comprend en outre :
e. au niveau de l'étape a), la fourniture d'un troisième élément non rigide allongé (17) qui comporte un axe longitudinal (18), une largeur (20) qui est perpendiculaire à l'axe longitudinal (18) et un passage transversal qui s'étend sur la totalité de la largeur (20) du troisième élément non rigide (17) ;
f. au niveau de l'étape b), le passage du troisième élément non rigide (17) au travers du passage transversal (9) du premier élément non rigide (2) de telle sorte que le passage transversal du troisième élément non rigide (17) soit en ligne avec l'alésage orienté axialement (4), en série avec le passage transversal (13) du deuxième élément non rigide (6) dans la direction de l'axe longitudinal (3) du premier élément non rigide (2) ; et
g. au niveau de l'étape d), l'introduction du composant central (7) au travers du passage transversal du troisième élément non rigide (17) avant son introduction à l'intérieur de la partie de l'alésage orienté axialement (4) sur l'autre côté du passage transversal (9) du premier élément non rigide (2).
